# FASCICULE DE BREVET EUROPEEN

(11) **EP 1 260 423 B1**
(45) Date de publication et mention de la délivrance du brevet: **16.07.2008**
(21) Numéro de dépôt: 02364028.7
(22) Date de dépôt: 22.05.2002
(51) Int. Cl.: B62B 9/18

(54) **Poussette à trois roues, à suspension arrière centrale**
Dreirädriger Kinderwagen mit zentraler hinterer Federung
Three-wheeled stroller with central rear suspension

(30) Priorité: 22.05.2001 FR 0106762
(43) Date de publication de la demande: 27.11.2002
(73) Titulaire: DOREL FRANCE SA, 49309 Cholet (FR)
(72) Inventeur: Zweideck, Bruno, 49300 Cholet (FR)
(74) Mandataire: Bioret, Ludovic

(56) Documents cités:
- EP-A- 0 897 849
- DE-U- 20 017 069
- FR-A- 718 684
- FR-A- 954 591

## Description

Le domaine de l'invention est celui de la puériculture. Plus précisément, l'invention concerne les voitures d'enfant, et en particulier les poussettes à trois roues présentant une unique roue avant (ou éventuellement deux roues accolées) montée en position centrale.

Les documents DE 20017069 U1 et EP 0897849 A1 montrent des poussettes selon le préambule de la revendication 1.

Très souvent, les poussettes sont équipées de quatre roues, ou blocs de roues, placées aux quatre angles d'un parallélogramme définissant sensiblement l'encombrement au sol de la poussette. Depuis quelques années sont cependant apparues des poussettes à trois roues : l'essieu avant est supprimé, et les piétements avant sont rapprochés l'un de l'autre pour former une fourche recevant l'axe d'une roue unique, se situant dans un plan vertical situé à égale distance des deux roues arrière, appelé par la suite plan central.

Ces poussettes à trois roues sont souvent équipées de roues de grande taille (par rapport aux poussettes classiques) d'un diamètre, par exemple, de l'ordre de 20 à 30 cm, avantageusement équipées de pneus et/ou de chambres à air gonflables. Elles sont généralement considérées comme des poussettes « tout terrain », ou à tout le moins « tout chemin ». Elles sont donc prévues pour des usages variés, et doivent être adaptées aux différents types de terrains.

Il est donc souhaitable de prévoir des moyens d'amortissement, de façon à assurer le confort de l'enfant transporté, même lorsque que le terrain est dégradé ou présente des trous et des bosses.

Certes, les roues gonflables apportent un meilleur confort que les roues pleines, mais on constate rapidement que cela n'est pas suffisant, ni pour l'enfant transporté, ni pour l'utilisateur poussant la voiture.

Il est connu depuis longtemps d'équiper les voitures d'enfant de roues munies de suspension. On trouvera dans la littérature de nombreux exemples de systèmes d'amortissement associés à chacune des roues d'une poussette.

Ces techniques donnent toute satisfaction dans le cas des poussettes à quatre roues. En revanche, les inventeurs ont constaté qu'elles s'avèrent mal adaptées, dans de nombreuses situations particulières, aux poussettes à trois roues. En effet, le franchissement d'un obstacle par l'une des roues arrière entraîne souvent un déséquilibre, qui peut induire un changement de direction, parfois brutal. Cela est dû notamment au fait que la roue avant, unique, n'offre pas la même stabilité, et la même résistance aux changements de direction, qu'une poussette à quatre roues (c'est d'ailleurs, dans la plupart des cas, l'un des avantages de ce type de poussette).

De plus, dans le cas des poussettes à quatre roues, le même obstacle est généralement franchi par les deux roues avant et arrière se situant du même coté. Le franchissement a été ressenti par la personne poussant la voiture d'enfant, qui peut alors anticiper l'effet sur la roue arrière, et contrôler plus aisément un éventuel changement de direction.

Ces situations, même si elles restent relativement rares, sont non seulement désagréables (effet de surprise, effort brusque pour reprendre la bonne direction,...) mais également, parfois, dangereuses, tant pour l'enfant (risques de chocs contre un obstacle, ou de renversement de la poussette) que pour la personne poussant la voiture d'enfant (risques de chute, notamment en cas d'usage « sportif », lorsque la poussette est poussée en courant, le cas échéant chaussé de patins à roulettes).

L'invention a notamment pour objectif de pallier ces inconvénients des poussettes à trois roues de l'état de l'art.

Plus précisément, un objectif de l'invention est de fournir une telle poussette, qui soit moins sensible aux changements de direction et aux autres effets induits par le franchissement d'un obstacle par l'une des roues arrière.

Ainsi, notamment, un objectif de l'invention est de fournir une telle poussette capable de mieux garder la direction choisie, même lorsque le terrain est plus ou moins « mouvementé » ou dégradé, et/ou que l'on utilise la poussette à une vitesse élevée (par rapport à la vitesse de la marche).

Un autre objectif de l'invention est, bien sûr, de fournir une telle poussette, offrant à l'enfant transporté un confort optimisé et une grande sécurité.

Un objectif particulier de certains modes de réalisation de l'invention est également de fournir une telle poussette, qui présente des qualités de freinage et d'immobilisation efficaces (conformes notamment aux normes européennes et anglo-saxonnes), malgré la présence de suspensions.

Ces objectifs, ainsi que d'autres qui apparaîtront plus clairement par la suite, sont atteints à l'aide d'une poussette à trois roues selon la revendication 1.

Les suspensions arrière ne sont donc pas, classiquement, appliquées sur chaque roue arrière, mais en un seul emplacement (ce qui est une simplification, en termes de nombre de pièces et de montage), au milieu de l'essieu arrière.

On obtient ainsi une efficacité plus grande, alliant confort et maintien de la direction choisie, même en cas de défauts de revêtement franchis par une seule roue arrière.

Selon un mode de réalisation avantageux de l'invention, lesdits moyens de suspension arrière comprennent au moins un ressort à boudin, s'étendant entre ledit essieu arrière et un élément du châssis de ladite poussette.

Il s'agit d'une solution simple à mettre en oeuvre, et permettant d'obtenir une bonne efficacité. Il est bien sûr possible d'utiliser d'autres types d'éléments élastiques pouvant assurer la fonction de suspension et/ou d'amortisseur, et le cas échéant de combiner plusieurs éléments élastiques.

Préférentiellement, la poussette de l'invention comprend des moyens de réglage de la dureté de ladite suspension arrière. Il peut notamment s'agir d'un élément d'épaisseur variable (came), monté sur ledit essieu arrière.

Avantageusement, ledit élément d'épaisseur variable est mobile en rotation autour dudit essieu arrière. De façon préférentielle, la poussette à trois roues comprend également une suspension avant. On peut notamment prévoir que ladite roue avant est montée sur une fourche, dont chaque branche porte un élément de suspension.

Cette suspension peut également être réglable.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente les éléments principaux d'un châssis de poussette selon l'invention, vu de derrière ;
- la figure 2 est une vue de côté du châssis de la figure 1 ;
- la figure 3 est une vue de devant du châssis de la figure 1 (seul un côté étant représenté, le second s'en déduisant directement, par symétrie).

L'invention concerne donc les poussettes à trois roues, équipées de moyens de suspension. Il peut par exemple s'agir d'une poussette pliante diffusée par le titulaire de la présente demande de brevet sous l'appellation « Everest », et mettant en oeuvre un pliage tel que décrit dans le document de brevet FR-9910685 au nom du titulaire de la présente demande.

Selon l'invention, la suspension arrière n'est donc pas mise en oeuvre sur chacune des roues arrière, comme cela est le cas dans les poussettes suspendues de types connus, mais de façon centrale, sur un essieu portant les roues arrière, sensiblement dans le plan défini par la roue avant unique. On obtient ainsi une poussette plus confortable et plus sûre, et en particulier moins sensible aux changements de direction intempestifs dus à des défauts de terrain.

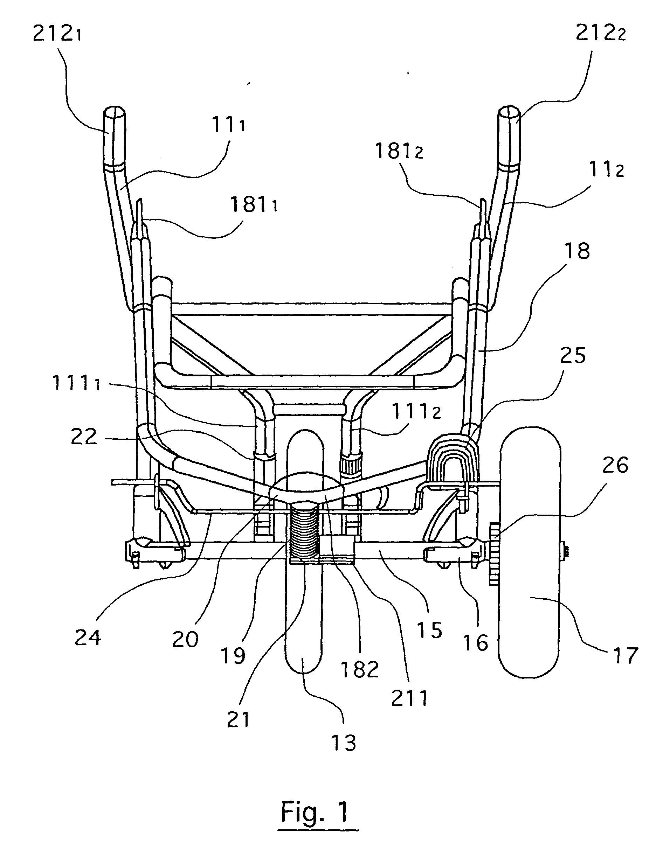

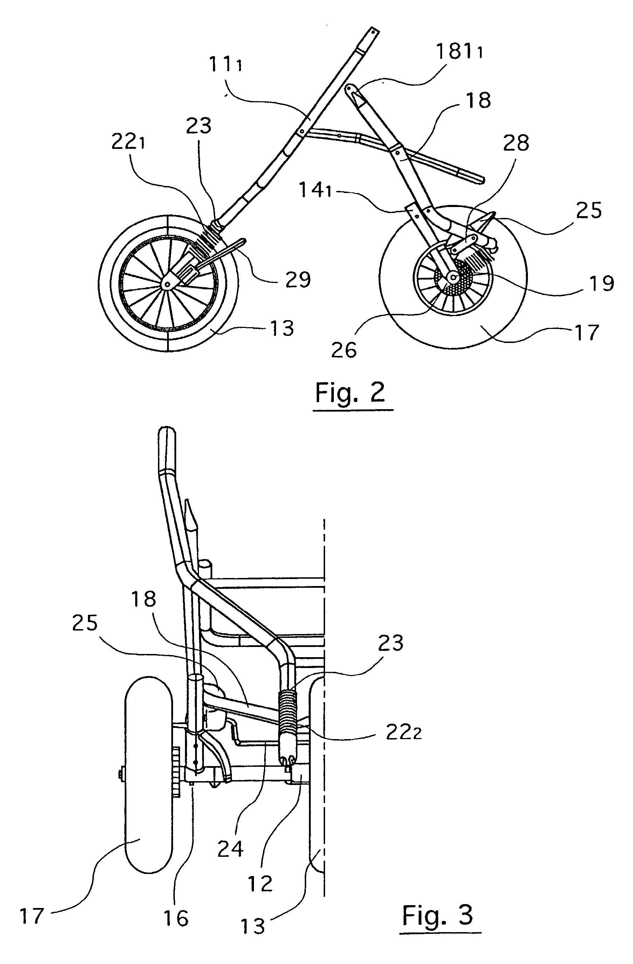

Les figures 1 à 3 présentent le châssis d'une telle poussette, respectivement vu de derrière, de côté et de devant. Seuls les éléments essentiels, dans le cadre de l'invention, sont représentés. Pour faciliter la lecture des figures, certains éléments (comme les piétements) sont interrompus.

Classiquement, le châssis comprend deux piétements avant 11₁ et 11₂ dont les extrémités inférieures 111₁ et 111₂ se rapprochent l'une de l'autre pour définir une fourche portant un axe 12 sur lequel est montée la roue avant 13.

Les extrémités supérieures 112₁ et 111₂ se prolongent par des bras poussoirs, non représentés, qui peuvent porter chacun une poignée ou se rejoindre pour former un guidon.

Les traverses arrière 14₁ et 14₂ ont leurs extrémités inférieures 141₁ et 141₂ montées de façon fixe (non suspendues) à l'essieu arrière 15, à l'aide d'une pièce de liaison 16, par exemple en matière plastique, au voisinage de l'une et l'autre, respectivement, des roues arrière 17. Il s'agit donc d'un train rigide.

Selon l'invention, le châssis présente en outre une traverse 18, par exemple en forme générale de « U » et dont la base forme un « V » très ouvert.

Les extrémités 181₁ et 181₂ de cette traverse 18 sont prévues pour être solidarisées, mobiles en rotation, aux piétements avant 11₁ et 11₂.

La pointe 182 du « V », c'est-à-dire le milieu de la traverse 18, est solidarisée à une extrémité d'un ressort de suspension 19, par l'intermédiaire d'une pièce de liaison 20, par exemple en matière plastique.

L'autre extrémité du ressort 19 est montée sur l'essieu 15, au milieu de ce dernier, de façon à la laisser libre en rotation. Avantageusement, la pièce de liaison 21 prévue à cet effet présente des moyens de réglage permet d'agir et de contrôler la dureté de la suspension par exemple entre trois positions prédéfinies, en agissant sur le débattement du ressort 19. Il peut par exemple s'agir d'une came comprimant plus ou moins le ressort, et que l'on règle à l'aide de la bague 211.

On obtient ainsi une suspension très simple à mettre en oeuvre, et qui s'avère plus efficace que des suspensions mises en oeuvre indépendamment sur chacune des roues arrière.

Préférentiellement, des suspensions sont également prévues par la roue avant, par exemple sous la forme de ressorts 22₁ et 22₂ montés dans le prolongement des piétements avant 11₁ et 11₂. Il s'agit avantageusement de suspensions télescopiques, adaptées de celles utilisées sur certains vélos. Elles peuvent être de dureté réglable, par exemple à l'aide de la bague 23, entre trois positions prédéfinies.

La poussette peut comprendre des moyens de freinage, classique dans le domaine des poussettes et/ou adaptés de ceux mis en oeuvre sur les vélos (sur la roue avant). On peut notamment prévoir un frein flottant

On peut notamment prévoir une tige 24, mobile entre une position de libération et une position de blocage, actionnable au pied à l'aide d'une pédale 25 et dont les extrémités sont prévues pour coopérer avec les crans d'une roue crantée 26 solidaire de chacune de roues arrière 17.

Avantageusement, les moyens de freinage agissent également sur le ressort 19, de façon à le maintenir dans une position prédéterminée. Ainsi, même lorsqu'elle se trouve sur une forte pente, la poussette ne se déplace pas (sous l'effet des suspensions) lorsque les moyens de freinage sont activés.

Un tube 28 en forme de U, chevauchant la roue avant 13, est avantageusement prévu pour porter un mécanisme de freinage à patins, agissant sur la roue avant, et commander, par exemple, à l'aide d'une poignée de freinage. Le tube 28 est monté de façon à suivre le déplacement de la roue quelque soit l'état de la suspension 24. Le câble de frein correspondant est monté sur un support d'articulation 28.

On n'a pas décrit la cinématique de pliage de la poussette, qui peut être de tout type connu, et notamment tel que décrit dans le document de brevet FR-9910685 déjà cité. Différents moyens de verrouillage / déverrouillage peuvent bien sûr être prévus.

Il peut par exemple s'agir du système connu sous le nom de « modulo clip » (marque déposée) diffusé par le titulaire de la présente demande de brevet.

La partie femelle de ce système est montée sur une traverse du châssis. La partie mâle est montée directement sur le dispositif de portage, ou sur un élément intermédiaire. Ce dernier peut se présenter sous la forme d'un simple kit d'adaptation, permettant de solidariser un siège auto au châssis, ou sous la forme d'un support de nacelle permettant de recevoir une nacelle.

Avantageusement, ces moyens de fixation sont conçus de façon que le dispositif de transport d'enfant puisse être indifféremment monté dans un sens ou dans l'autre.

On prévoit également, préférentiellement, des moyens permettant de contrôler l'inclinaison de ce dispositif. Ces moyens de contrôle de l'inclinaison peuvent être solidaire du châssis ou du dispositif de transport d'enfant.

Bien entendu, des variantes de l'invention peuvent être envisagées, notamment sur les modes de réalisation et de mise en oeuvre de la suspension arrière. Notamment, le ressort 19 peut être remplacé par un autre type de ressort et/ou tout autre moyen élastique adapté. On peut également prévoir d'associer deux (ou plus) ressorts voisins l'un de l'autre.

## Revendications

1. Poussette à trois roues, deux roues arrière (17) montées sur un essieu arrière (15) et une roue avant (13) unique montée en position centrale, dans un plan vertical situé à égale distance de chacune desdites roues arrière, dit plan central,
**caractérisée en ce qu'**elle comprend une traverse (18) en forme générale de U montée mobile en rotation par rapport à deux piètements (11₁, 11₂), et des moyens de suspension arrière (19) montés entre ledit essieu arrière (15) et ladite traverse (18), et s'étendant sensiblement dans ledit plan central.

2. Poussette à trois roues selon la revendication 1, **caractérisée en ce que** lesdits moyens de suspension arrière comprennent au moins un ressort à boudin (19), s'étendant entre ledit essieu arrière et un élément du châssis de ladite poussette.

3. Poussette à trois roues selon l'une quelconque des revendications 1 et 2, **caractérisée en ce qu'**elle comprend des moyens de réglage de la dureté de ladite suspension arrière.

4. Poussette à trois roues selon la revendication 3, **caractérisée en ce que** lesdits moyens de réglage comprennent un élément d'épaisseur variable, monté sur ledit essieu arrière.

5. Poussette à trois roues selon la revendication 4, **caractérisée en ce que** ledit élément d'épaisseur variable est mobile en rotation autour dudit essieu arrière.

6. Poussette à trois roues selon les revendications 1 à 5 , **caractérisée en ce qu'**elle comprend une suspension avant (22₁, 22₂).

7. Poussette à trois roues selon la revendication 6, **caractérisée en ce que** ladite roue avant est montée sur une fourche, dont chaque branche porte un élément de suspension (22).

8. Poussette à trois roues selon l'une quelconque des revendications 6 et 7, **caractérisée en ce que** ladite suspension avant (22) est réglable.

## Claims

1. Pushchair with three wheels, i.e. two rear wheels (17) which are fitted on a rear axle (15) and a single front wheel (13) which is fitted in a central position, on a vertical plane which is situated at an equal distance from each of the said rear wheels, and is known as the central plane, **characterised in that** it comprises a cross-member (18) in the general form of a "U" which is fitted such as to be mobile in rotation relative to two supports (11₁, 11₂), and rear suspension means (19) which are fitted between the said rear axle (15) and the said cross-member (18), and extend substantially on the said central plane.

2. Pushchair with three wheels according to claim 1, **characterised in that** the said rear suspension means comprise at least one coil spring (19) which extends between the said rear axle and an element of the frame of the said pushchair.

3. Pushchair with three wheels according to either of claims 1 and 2, **characterised in that** it comprises means for adjustment of the hardness of the said rear suspension.

4. Pushchair with three wheels according to claim 3, **characterised in that** the said adjustment means comprise an element with variable thickness, which is fitted on the said rear axle.

5. Pushchair with three wheels according to claim 4, **characterised in that** the said element with variable thickness is mobile in rotation around the said rear axle.

6. Pushchair with three wheels according to claims 1 to 5, **characterised in that** it comprises front suspension (22₁, 22₂).

7. Pushchair with three wheels according to claim 6, **characterised in that** the said front wheel is fitted on a fork, each branch of which supports a suspension element (22).

8. Pushchair with three wheels according to either of claims 6 and 7, **characterised in that** the said front suspension (22) is adjustable.

## Patentansprüche

1. Dreirädriger Kinderwagen, bei dem zwei Hinterräder (17) an einer Hinterachse (15) montiert sind und ein einziges Vorderrad (13) mittig in einer vertikalen Ebene, die gleich weit von jedem der Hinterräder entfernt liegt und zentrale Ebene genannt wird, montiert ist,
**dadurch gekennzeichnet, dass** er einen U-förmigen Querträger (18) umfasst, der drehbeweglich zu zwei Beinelementen (11₁, 11₂) montiert ist, und hintere Federungsmittel (19), die zwischen der Hinterachse (15) und dem Träger (18) montiert sind und im Wesentlichen in dieser zentralen Ebene liegen.

2. Dreirädriger Kinderwagen nach Anspruch 1,
**dadurch gekennzeichnet, dass** die hinteren Federungsmittel mindestens eine Schraubenfeder (19) umfassen, die zwischen der Hinterachse und einem Element des Rahmens des Kinderwagens liegt.

3. Dreirädriger Kinderwagen nach einem der Ansprüche 1 und 2,
**dadurch gekennzeichnet, dass** er Mittel zum Einstellen der Härte der hinteren Federung umfasst.

4. Dreirädriger Kinderwagen nach Anspruch 3,
**dadurch gekennzeichnet, dass** die Einstellmittel ein Element mit veränderlicher Dicke bzw. Höhe umfassen, das an der Hinterachse montiert ist.

5. Dreirädriger Kinderwagen nach Anspruch 4,
**dadurch gekennzeichnet, dass** das Element mit veränderlicher Dicke um die Hinterachse drehbeweglich ist.

6. Dreirädriger Kinderwagen nach den Ansprüchen 1 bis 5,
**dadurch gekennzeichnet, dass** er eine vordere Federung (22₁, 22₂) umfasst.

7. Dreirädriger Kinderwagen nach Anspruch 6,
**dadurch gekennzeichnet, dass** das Vorderrad an einer Gabel montiert ist, deren Arme jeweils ein Federungselement (22) tragen.

8. Dreirädriger Kinderwagen nach einem der Ansprüche 6 und 7,
**dadurch gekennzeichnet, dass** die vordere Federung (22) einstellbar ist.
